# EUROPEAN PATENT SPECIFICATION

(11) **EP 0 723 497 B1**
(45) Date of publication and mention of the grant of the patent: **13.01.1999**
(21) Application number: 94928990.4
(22) Date of filing: 12.10.1994
(51) Int. Cl.: B29D 30/56, B29D 30/72

(54) **TYRE REFURBISHMENT**
REIFENRUNDERNEUERUNG
RECHAPAGE DE PNEU

(30) Priority: 13.10.1993 GB 9321081; 24.02.1994 GB 9403557
(43) Date of publication of application: 31.07.1996
(73) Proprietor: CTS Brackley Limited, Brakley, Northamptonshire NN13 5UG (GB)
(72) Inventor: WILEY, Philip, John, Northamptonshire NN13 6HT (GB); LEES, Roger, Ernest, Hook Norton Oxfordshire OX15 5NP (GB)
(74) Representative: Britter, Keith Palmer
(86) International application number: GB9402241
(87) International publication number: WO9510406

(56) References cited:
- EP-A- 0 333 889
- DE-A- 3 404 940
- US-A- 2 574 171
- US-A- 3 935 045

## Description

This invention relates to the refurbishment of a tyre, wherein a new tread pattern is applied to an old tyre casing and the side walls of the casing are newly-embossed with a pattern, such as, size, trade mark and other identification markings.

In one known method of refurbishing a tyre, a heated metal mould or matrix is used to apply simultaneously new tread and side wall patterns to the pre-buffed, generally smooth tread area and side walls of the casing of a worn tyre. In this so-called "bead-to-bead" tyre refurbishment method, the heated metal mould or matrix includes the tread and side wall patterns, which means that for the same size of tyre, several different metal moulds or matrices are required for the various different tread and side wall patterns.

This arrangement is extremely expensive, in that numerous moulds or matrices need to be made and stored.

In another known method of refurbishing a tyre, only a pre-cured tread pattern is applied to the pre-buffed, generally smooth tread area of the cover of a worn tyre, without re-marking the side walls of the tyre casing with a pattern but using the existing pattern thereon.

In this other known method of tyre refurbishment, the old tyre casing, with its existing side wall Pattern, and a pre-cured tread pattern in proper registration with each other, are located within a flexible rubber envelope consisting of two halves sealed together in airtight relationship. Then, the sealed envelope is evacuated such that it engages tightly with the tyre casing and associated tread pattern. Thereafter, the complete assembly is heated to a temperature of approximately 125°C and subjected to external pressurisation, to apply the tread pattern securely to the tread area of the casing.

A suitable adhesive, such as that known as "cushion gum", is used to secure the tread pattern firmly to the pre-buffed, generally smooth tread area of the casing, in known manner.

A major disadvantage of this particular method of tyre refurbishment is that the old side wall pattern remains on the refurbished tyre but tends to look unsightly.

It is an object of the present invention to provide a method of tyre refurbishment and associated die which eliminate, or at least substantially overcome, the disadvantages associated with the known methods of tyre refurbishment as discussed above.

Further, in European Patent No. 0333889 (Oliver Rubber Company) and in German Patent No. 3404940 (Heinrich Ellerbrock & Sohne GmbH & Co KG), there are disclosed methods of and apparatii for refurbishing used tyres by, inter alia, replacing embossed side walls on used tyre casings, wherein: a so-called "veneer" of uncured rubber is attached to each pre-roughened side wall of a used tyre casing; a mould, former or other suitable die member is located over each so-attached veneer; and then a flexible curing envelope, usually of rubber, is placed around the casing including the veneers and associated die members in sealing engagement therewith, for subsequent embossing and curing of the veneers.

A major disadvantage associated with each of those two further prior art arrangements is that it is very difficult to locate each die member over its associated veneer in proper registration therewith and to maintain such registration whilst the curing envelope is placed around the casing and, subsequently, during the curing process, complicated and expensive arrangements having been proposed therefor.

It is a further object of the present invention to overcome, or at least substantially reduce, at least this major disadvantage associated with the tyre refurbishment arrangements and methods disclosed in EP 0333889 and DE 3404940, as discussed above.

Accordingly, the invention provides a die which is annular in shape, which has impressed therein the negative of a pattern to be embossed upon the side wall of a used tyre casing and which is arranged to be located over and in proper registration with a veneer attached to the wall of a tyre casing between that wall and a corresponding portion of a curing envelope,
the inventive die being characterised in that a radially inner portion thereof is arranged to extend at least partially around a bead of the tyre casing, to centralise the die with respect to the casing and to retain the die in proper registration therewith, and hence with the veneer, during a subsequent curing operation.

Preferably, the "veneer" is of rubber or rubber-like material which is located between the die and side wall within the curing envelope and which may be perforated to allow any air to escape from between the veneer and side wall during the curing operation.

The die itself may be rigid or semi-rigid and is preferably suitably shaped, such as, curved, and dimensioned to fit the curved side wall of the tyre casing and to extend generally radially outwardly with respect to the centre of the tyre casing to such an extent that it overlaps the edge of the pre-cured tread pattern and, as defined above, extends radially inwardly to extend at least partially around the associated tyre casing bead. With this arrangement, the annular die can be centralised with respect to the tyre casing, such that the pattern is embossed upon the veneer of the side wall of the casing in proper registration therewith. Further, the die may also be perforated to allow any air to escape from between the veneer and the die during the curing operation.

Another aspect of the invention resides in a method of refurbishing a tyre, comprising providing a die as defined above in accordance with the invention or any modification thereof, locating the die in proper registration with respect to a veneer attached to the side wall of a casing of a used tyre to be refurbished, such that the radially inner portion of the die extends at least partially around the bead of the casing to retain the die in proper registration therewith, placing the tyre casing, with the die in proper registration with the veneer and side wall thereof, and an associated tread pattern within a curing envelope and, subsequently, carrying out a curing operation, to provide a refurbished tyre with the desired pattern embossed upon the side wall veneer of the casing.

As indicated above, a veneer is preferably inserted between each of the two side walls of the tyre casing and respective dies before the envelope is applied to such combination and the curing operation is carried out, such that marking of the side walls with the desired pattern is effected by embossing the veneers which become firmly adhered to the side walls during the curing operation.

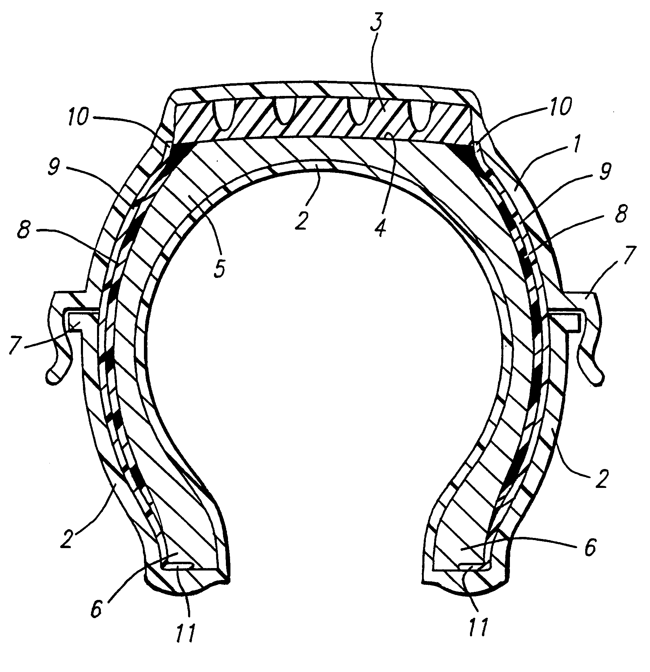

In order that the invention may be more fully understood, a preferred method of refurbishing a used tyre employing a die in accordance with the invention, will now be described by way of example and with reference to the accompanying drawing which is a section of a curing envelope assembly and associated used tyre casing prior to the curing operation.

Referring to the drawing, a curing envelope for refurbishing a used tyre casing 5 which has had its opposed side walls and tread area pre-buffed to remove any remaining tread and side wall patterns therefrom, is of generally toroidal configuration and consists of two parts 1, 2 made of a flexible rubber or rubber-like material in known manner. The envelope extends around the whole of the tyre and its first part 1 extends from one of the pre-buffed side walls to the other, over a pre-cured tread pattern 3 which has been located in registration with the corresponding tread area 4 of the tyre casing 5. A suitable adhesive sheet, generally known as "cushion gum", is located between the tread pattern 3 and the tread area 4.

The second part 2 of the envelope extends between the side walls of the tyre casing 5 via the beads 6 and the interior of the casing 5.

The two envelope parts 1 and 2 are secured together at 7 in known manner, to provide an airtight seal therebetween.

A perforated annular veneer 8, again of suitable rubber or rubber-like material, is placed in proper registration with each side wall of the tyre casing 5, with a suitable adhesive therebetween and with the radially outer edges of the veneers spaced from the respective radially inner edges of the tread pattern 3.

A perforated annular die 9 is located between each side wall veneer 8 and the corresponding portions of the envelope parts 1 and 2, such that its radially outer edge portion 10 overlaps the radially inner edge of the tread pattern 3 and such that its radially inner edge portion 11 engages with and extends at least partially around the corresponding bead 6 of the casing 5.

The shape of each annular die 9 particularly where it engages with and extends around the casing bead 6, is such that it is able to centralise readily in proper registration with respect to the veneers 8 and associated side walls of the casing 5.

Each annular die 9, which is preferably rigid or semi-rigid and is preferably made of a synthetic plastics material which may be reinforced with glass fibre, is impressed on its inner surface with the negative of the pattern to be embossed on the corresponding veneer 8 of each side wall of the casing 5.

In its evacuated state, as shown in the Figure, the envelope assembly with its contents are now ready for the curing operation, wherein such assembly is heated to a temperature of approximately 125°C and is subjected to external pressure, say, by evacuation, for a period of, say, two hours.

After cooling, the envelope parts 1 and 2 are removed from the now refurbished tyre casing 5, with the tread pattern 3 adhered firmly thereto and the desired pattern embossed on each side wall in proper registration therewith.

## Claims

1. A die (9) which is annular in shape, which has impressed therein the negative of a pattern to be embossed upon the side wall of a used tyre casing (5) and which is arranged to be located over and in proper registration with a veneer (8) attached to the wall of a tyre casing (5) between that wall and a corresponding portion of a curing envelope (1, 2),
characterised in that a radially inner portion (11) of the die (9) is arranged to extend at least partially around a bead (6) of the tyre casing (5), to centralise the die (9) with respect to the casing (5) and to retain the die (9) in proper registration therewith , and hence with the veneer (8), during a subsequent curing operation.

2. A die (9) according to claim 1, which is shaped and dimensioned to fit the curved side wall of a tyre casing (5) to be refurbished and to extend generally radially outwardly with respect to the centre of the tyre casing (5) to such an extent that it overlaps the edge of a pre-cured tread (3) of the tyre casing (5).

3. A die (9) according to claim 1 or 2, which is perforated to allow any air to escape from between a veneer (8) and the die (9) during use thereof in a curing operation.

4. A die (9) according to claim 1, 2 or 3, which is rigid or semi-rigid.

5. A die (9) according to any preceding claim, which is made of synthetic plastics material.

6. A die (9) according to claim 5, wherein the synthetic plastics material is reinforced with glass fibre.

7. A method of refurbishing a tyre comprising providing a die (9) in accordance with any preceding claim, locating the die (9) in proper registration with respect to a veneer (8) attached to a side wall of a casing (5) of a used tyre to be refurbished, such that the radially inner portion (11) of the die (9) extends at least partially around a bead (6) of the casing (5) to retain the die (9) in proper registration therewith, placing the tyre casing (5), with the die (9) in proper registration with the veneer (8) and side wall thereof, and an associated tread (3) within a curing envelope (1, 2) and, subsequently, carrying out a curing operation, to provide the refurbished tyre with the desired pattern embossed upon the side wall veneer (8) of the casing (5).

8. A method according to claim 7, wherein the veneer (8) is perforated to allow any air to escape from between the veneer (8) and side wall during the curing operation.

9. A method according to claim 7 or 8, wherein the veneer (8) is of rubber or a rubber-like material.

10. A method according to claim 7, 8 or 9, wherein a die (9) is located in proper registration with respect to a veneer (8) attached to each side wall of the used tyre casing (5), such that both side walls are marked with the desired pattern embossed on the respective veneers (8) which become firmly adhered to the respective side walls during the curing operation.

## Patentansprüche

1. Form (9) von ringförmiger Gestalt, auf der das Negativ eines Musters eingedrückt ist, das in die Seitenwand eines Altreifenmantels (5) eingeprägt werden soll und welche dazu ausgebildet ist, über einer Deckfolie (8) und in der richtigen Lage relativ zu dieser angeordnet zu werden, welche Deckfolie an der Wand eines Reifenmantels (5) zwischen dieser Wand und einem entsprechenden Abschnitt einer Vulkanisierhülle (1, 2) angeordnet ist,
dadurch gekennzeichnet, daß ein radial innerer Abschnitt (11) der Form (9) dazu ausgebildet ist, sich mindestens teilweise um einen Wulst (6) des Reifenmantels (5) zu erstrecken, um die Form (9) relativ zum Reifenmantel (5) zu zentrieren und während eines nachfolgenden Vulkanisiervorgangs die Form in der richtigen Lage hierzu und folglich zur Deckfolie (8) zu halten.

2. Form (9) nach Anspruch 1, welche so geformt und bemessen ist, daß sie an die gekrümmte Seitenwand eines rundzuerneuernden Reifenmantels (5) paßt und sich, bezogen auf den Mittelpunkt des Reifenmantels (5), im wesentlichen radial nach außen so weit erstreckt, daß sie die Kante eines vorvulkanisierten Profils (3) des Reifenmantels (5) überlappt.

3. Form (9) nach Anspruch 1 oder 2, welche mit Löchern versehen ist, um während ihrer Benutzung bei einem Vulkanisiervorgang das Entweichen von zwischen einer Deckfolie (8) und der Form (9) befindlicher Luft zu ermöglichen.

4. Form (9) nach Anspruch 1, 2 oder 3, welche starr oder halbstarr ist.

5. Form (9) nach einem der vorhergehenden Ansprüche, welche aus einem Kunststoff hergestellt ist.

6. Form (9) nach Anspruch 5, bei welcher der Kunststoff mit Glasfasern verstärkt ist.

7. Verfahren zum Runderneuern eines Reifens, welches folgende Schritte aufweist:
Eine Form (9) nach einem der vorhergehenden Ansprüche wird vorgesehen, und diese Form (9) wird in die richtige Lage bezüglich einer an einer Seitenwand eines Mantels (5) eines rundzuerneuernden Reifens befestigten Deckfolie (8) gebracht, so daß sich der radial innere Abschnitt (11) der Form (9) mindestens teilweise um einen Wulst (6) des Mantels (5) erstreckt, um die Form (9) in der richtigen Lage hierzu zu halten;
der Reifenmantel (5), bei dem sich die Form (9) in der richtigen Lage bezüglich der Deckfolie (8) und der Seitenwand des Reifens befindet, und ein
zugeordnetes Profilteil (3), werden in eine Vulkanisierhülle (1, 2) eingebracht, und danach wird ein Vulkanisiervorgang ausgeführt, um den runderneuerten Reifen mit dem gewünschten Muster zu versehen, das auf die Seitenwand-Deckfolie (8) des Reifenmantels (5) eingeprägt ist.

8. Verfahren nach Anspruch 7, bei welchem die Deckfolie (8) mit Löchern versehen ist, um während des Vulkanisiervorgangs das Entweichen von zwischen der Deckfolie (8) und der Seitenwand eingeschlossener Luft zu ermöglichen.

9. Verfahren nach Anspruch 7 oder 8, bei welchem die Deckfolie (8) aus Gummi oder einem gummiartigen Material ist.

10. Verfahren nach Anspruch 7, 8 oder 9, bei welchem eine Form (9) in die richtige Lage relativ zu einer Deckfolie (8) gebracht wird, die jeweils an einer Seitenwand des Gebrauchtreifenmantels (5) befestigt ist, so daß beide Seitenwände mit dem gewünschten Muster markiert werden, das auf die betreffenden Deckfolien (8) eingeprägt wird, welche während des Vulkanisiervorgangs eine feste Haftverbindung mit den zugeordneten Seitenwänden eingehen.

## Revendications

1. Matrice (9), de forme annulaire, dans laquelle est imprimé le négatif d'un motif à marquer en relief sur le flanc d'une carcasse (5) de pneu usé, et qui est prévue pour être placée, correctement alignée, sur une feuille de placage (8) qui est fixée à la paroi de la carcasse de pneu (5), entre cette paroi et une partie correspondante d'une enveloppe de vulcanisation (1, 2),
caractérisée en ce qu'une partie interne radiale (11) de la matrice (9) est prévue pour s'étendre au moins partiellement autour d'un bourrelet (6) de la carcasse de pneu (5) afin de centrer la matrice (9) par rapport à la carcasse de pneu (5) et de fixer la matrice (9), correctement alignée avec ladite carcasse (5), et, donc, avec la feuille de placage (8) lors d'une opération ultérieure de vulcanisation.

2. Matrice (9) suivant la revendication 1, dont la forme et la dimension lui permettent de s'adapter au flanc incurvé de la carcasse de pneu (5) à rechaper et de s'étendre généralement radialement vers l'extérieur par rapport au centre de la carcasse de pneu (5) au point de recouvrir le bord d'une bande de roulement pré-vulcanisée (3) de la carcasse de pneu (5).

3. Matrice (9) suivant la revendication 1 ou 2, qui est perforée pour permettre à l'air de s'échapper entre une feuille de placage (8) et la matrice (9) pendant son utilisation dans une opération de vulcanisation.

4. Matrice (9) suivant la revendication 1, 2 ou 3, qui est rigide ou semi-rigide.

5. Matrice (9) suivant l'une quelconque des revendications précédentes, qui est faite en matière plastique synthétique.

6. Matrice (9) suivant la revendication 5, dans laquelle la matière plastique synthétique est renforcée par des fibres de verre.

7. Méthode de rechapage d'un pneu comprenant le fait de prévoir une matrice (9) suivant une revendication précédente quelconque, de placer la matrice (9) correctement alignée par rapport à une feuille de placage (8) qui est fixée à une paroi latérale d'une carcasse (5) d'un pneu usé à rechaper, de façon que la partie interne radiale (11) de la matrice (9) s'étende au moins partiellement autour d'un bourrelet (6) de la carcasse de pneu (5) pour fixer la matrice (9) correctement alignée avec lui, de placer la carcasse du pneu (5) avec la matrice (9) correctement alignée avec la feuille de placage (8) et sa paroi latérale, et une bande de roulement (3) associée dans une enveloppe de vulcanisation (1, 2) et, ensuite, de réaliser une opération de vulcanisation, pour avoir le pneu rechapé avec le motif désiré marqué en relief sur la feuille de placage (8) du flanc de la carcasse (5).

8. Méthode suivant la revendication 7, dans laquelle la feuille de placage (8) est perforée pour permettre à l'air de s'échapper entre la feuille de placage (8) et le flanc pendant l'opération de vulcanisation.

9. Méthode suivant la revendication 7 ou 8, dans laquelle la feuille de placage (8) est du caoutchouc ou une matière caoutchouteuse.

10. Méthode suivant la revendication 7, 8 ou 9, dans laquelle une matrice (9) est placée, correctement alignée par rapport à une feuille de placage (8) qui est fixée à chaque flanc d'une carcasse (5) de pneu usé, de façon que les deux flancs soient marqués avec le motif désiré en relief sur les feuilles de placage respectives (8) qui adhèrent alors fermement aux flancs respectifs pendant l'opération de vulcanisation.
